(19) Europäisches Patentamt
European Patent Office
Office européen des brevets

(11) **EP 2 785 095 B1**

(12) **EUROPEAN PATENT SPECIFICATION**

(45) Date of publication and mention
of the grant of the patent:
**07.09.2016 Bulletin 2016/36**

(21) Application number: **12850401.6**

(22) Date of filing: **19.07.2012**

(51) Int Cl.:
*H04W 16/18* (2009.01)      *H04W 24/02* (2009.01)

(86) International application number:
**PCT/CN2012/078857**

(87) International publication number:
**WO 2013/071771 (23.05.2013 Gazette 2013/21)**

(54) **SITE SELECTION METHOD AND DEVICE**

STANDORTAUSWAHLVERFAHREN UND -VORRICHTUNG

PROCÉDÉ ET DISPOSITIF DE SÉLECTION DE SITE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.11.2011 CN 201110363209**

(43) Date of publication of application:
**01.10.2014 Bulletin 2014/40**

(73) Proprietor: **Huawei Technologies Co., Ltd.
Longgang District
Shenzhen, Guangdong 518129 (CN)**

(72) Inventors:
• **WANG, Peng**
  **Shenzhen**
  **Guangdong 518129 (CN)**
• **XIANG, Rui**
  **Shenzhen**
  **Guangdong 518129 (CN)**
• **YUE, Weipeng**
  **Shenzhen**
  **Guangdong 518129 (CN)**
• **ZHANG, Jianming**
  **Shenzhen**
  **Guangdong 518129 (CN)**

(74) Representative: **Epping - Hermann - Fischer
Patentanwaltsgesellschaft mbH
Schloßschmidstraße 5
80639 München (DE)**

(56) References cited:
EP-A1- 1 773 083          CN-A- 1 556 661
CN-A- 101 848 355         CN-A- 101 998 409
CN-A- 102 083 079         US-A1- 2012 108 246

• HUNG-YU WEI ET AL: "Adhoc relay network planning for improving cellular data coverage", PERSONAL, INDOOR AND MOBILE RADIO COMMUNICATIONS, 2004. PIMRC 2004. 15 TH IEEE INTERNATIONAL SYMPOSIUM ON BARCELONA, SPAIN 5-8 SEPT. 2004, PISCATAWAY, NJ, USA,IEEE, PISCATAWAY, NJ, USA, vol. 2, 5 September 2004 (2004-09-05), pages 769-773, XP010754135, DOI: 10.1109/PIMRC.2004.1373804 ISBN: 978-0-7803-8523-8
• NOKIA ET AL: "Modification to the RSRP definition", 3GPP DRAFT; R1-082608, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Warsaw, Poland; 20080625, 25 June 2008 (2008-06-25), XP050110862, [retrieved on 2008-06-25]
• NOKIA SIEMENS NETWORKS ET AL: "Modification of RSRP definition", 3GPP DRAFT; R1-083199_25215CR0192, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20080812, 12 August 2008 (2008-08-12), XP050316628, [retrieved on 2008-08-12]

## Description

### TECHNICAL FIELD

The present invention relates to the field of mobile communications technologies, and in particular, to a site selection method and device and a grid selection method and device.

### BACKGROUND

In a Long Term Evolution-Advanced (LTE-A) system, in order to improve throughput rates of cell edge users, a relay node (relay) may be deployed in a network. At a place where the relay is deployed, communication between a base station and a mobile station needs to be processed by the relay, and the relay amplifies or regenerates a signal and then forwards the signal. This communication mode can greatly improve coverage and signal quality of a place where coverage is relatively poor.

However, because a current relay protocol is not perfect, there is no solution for solving a problem of automatic site selection of a relay.

Document "Adhoc relay network planning for improving cellular data coverage" by HUNG-YU WEI ET AL. disclosed a method of deploying dual-mode adhoc relay nodes on a high-speed cellular system to provide better system coverage and enhance location dependent user throughput.

### SUMMARY

The present invention provides a site selection method and device and a grid selection method and device to implement automatic site selection for a relay node or a small-cell base station.

The present invention provides a site selection method, including:

dividing a to-be-analyzed area in which a station is to be deployed, into multiple grids, wherein the station is a relay node or a small-cell base station in a long term evolution-advanced, LTE-A, system;
obtaining sampling points corresponding to each grid by sampling at an interval of a map resolution;
obtaining multiple signal indicator values of each sampling point, wherein the multiple signal indicator values include a reference signal received power, RSRP, and a signal to interference plus noise ratio, SINR;
obtaining a fitted value of each sampling point according to the multiple signal indicator values;
obtaining an RSRP value and an SINR value of each grid according to the fitted value of each sampling point;
if the RSRP value of a grid is between a set lowest threshold and a set highest threshold, and the SINR value of the grid is greater than a set threshold, determining the grid is a grid in which the station needs to be deployed; and
deploying the station in the grid.

The present invention provides a site selection device, including:

a dividing module, configured to divide a to-be-analyzed area in which a station is to be deployed, into multiple grids, wherein the station is a relay node or a small-cell base station in a long term evolution-advanced, LTE-A, system; and
a deploying module, configured to:

obtain sample points corresponding to each grid by sampling at an interval of a map resolution,
obtain multiple signal indicator values of each sampling point, wherein the multiple signal indicator values include a reference signal received power, RSRP, and a signal to interference plus noise ratio, SINR,
obtain a fitted value of each sampling point according to the multiple signal indicator values,
obtain an RSRP value and an SINR value of each grid according to the fitted value of the sampling point,
if the RSRP value of a grid is between a set lowest threshold and a set highest threshold, and the SINR value of the grid is greater than a set threshold, determine the grid is a grid in which the station needs to be deployed, and
deploy the station in the grid.

As can be known from the foregoing technical solutions, in the present invention, grid dividing is performed for an area in which a station is to be deployed, points in a grid are sampled, a grid in which a station needs to be deployed is determined according to signal indicator values obtained by sampling, and a station needing to be deployed is deployed in the grid in which a station needs to be deployed, thereby implementing automatic site selection for the station.

**BRIEF DESCRIPTION OF DRAWINGS**

To describe the technical solutions in the embodiments of the present invention more clearly, the following briefly introduces the accompanying drawings required for describing the embodiments. Apparently, the accompanying drawings in the following description show some embodiments of the present invention, and persons of ordinary skill in the art may still derive other drawings from these accompanying drawings without creative efforts.

FIG. 1 is a schematic flowchart of a method according to a first embodiment of the present invention;
FIG. 2 is a schematic diagram of grid dividing according to an embodiment of the present invention;
FIG. 3 is a schematic diagram of a relationship between a weighted value and an indicator value according to an embodiment of the present invention;
FIG. 4 is a schematic flowchart of a method according to a second embodiment of the present invention;
FIG. 5 is a schematic diagram of site screening according to an embodiment of the present invention;
FIG. 6 is a schematic diagram of site combining according to an embodiment of the present invention;
FIG. 7 is a schematic flowchart of a method according to a third embodiment of the present invention;
FIG. 8 is a schematic flowchart of a method according to a fourth embodiment of the present invention;
FIG. 9 is a schematic structural diagram of a device according to a fifth embodiment of the present invention;
FIG. 10 is a schematic flowchart of a grid selection method according to an embodiment of the present invention; and
FIG. 11 is a schematic structural diagram of a grid selection device according to an embodiment of the present invention.

**DESCRIPTION OF EMBODIMENTS**

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

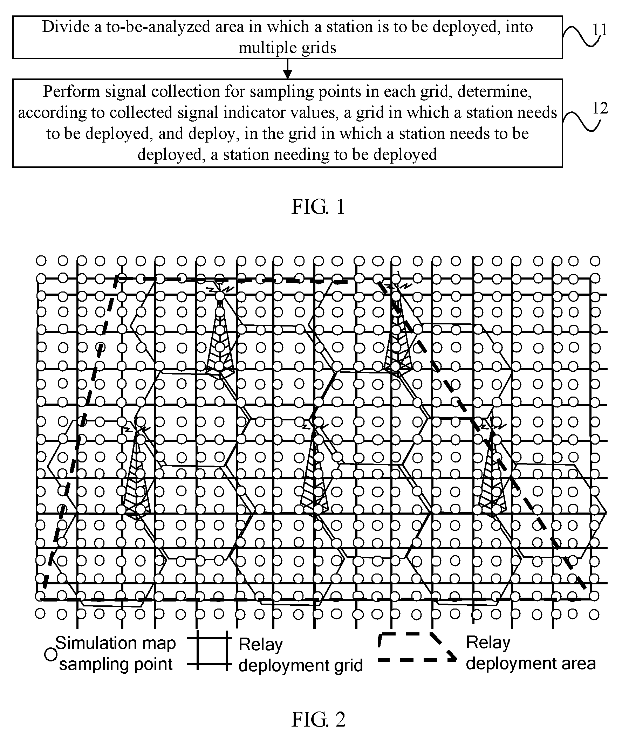

FIG. 1 is a schematic flowchart of a method according to a first embodiment of the present invention, where the method includes:

Step 11: Divide a to-be-analyzed area in which a station is to be deployed, into multiple grids.

The station in this embodiment of the present invention may be a relay node (relay) or a small-cell base station.

Optionally, a dividing process may include: determining a minimum rectangle including an area in which a station is to be deployed, as the to-be-analyzed area; and dividing the minimum rectangle according to a transmission radius of the station, to obtain multiple grids.

Further, before the dividing, the following may be included: acquiring an area in which a relay node or a small-cell base station is to be deployed.

A site selection solution in this embodiment of the present invention may be applicable to site selection of a relay and may further be applicable to site selection of a small-cell base station. The site selection of a relay is used as an example in the following.

During planning, an area in which a relay is to be deployed may be selected. For example, an area A is selected as the area in which a relay is to be deployed.

The to-be-analyzed area may be a minimum rectangle including the area in which a relay node or a small-cell base station is to be deployed. As shown in FIG. 2, a trapezoid represents an area in which a relay is to be deployed, and a minimum rectangle including the trapezoid is a to-be-analyzed area. Then, the to-be-analyzed area may be divided into multiple grids at an interval of N. During dividing, the to-be-analyzed area may be divided from an upper-left corner, and each grid is a square with a side length of N. Certainly, if a part divided last cannot form a square, a rectangular grid may appear at an edge of the to-be-analyzed area.

A value range of N may be: $\sqrt{2}R \le N \le 2R$, where R is a transmission radius of the relay. N may be selected to be any value in the range of $\sqrt{2}R \le N \le 2R$ according to an actual requirement. For example, when N is selected to be $\sqrt{2}R$, it indicates that a diagonal length of a square grid is 2R, and when N is selected to be 2R, it indicates that a side length of a square grid is 2R. N may be 2R by default.

Step 12: Perform signal collection for sampling points in each grid, determine, according to collected signal indicator values, a grid in which a station needs to be deployed, and deploy, in the grid in which a station needs to be deployed, a station needing to be deployed.

When the grids are processing objects, points in each grid may be sampled at an interval of a map resolution to obtain the sampling points. The points in the grid herein include points inside an edge of the grid and points on an edge of the grid.

The collected signal indicator values may be determined according to an actual requirement. For example, the collected signal indicator values include a reference signal received power (RSRP) and a signal to interference plus noise ratio (SINR).

After different signal indicator values are obtained, the different signal indicator values may be fitted to obtain fitted values of the sampling points. For example, a computational formula is: $fitValue_i = \alpha_1 V_{RSRP} + \alpha_2 V_{SINR} + \cdots + \alpha_n V_{some\_item}$, where $fitValue_i$ is a fitted value of a sampling point $i$, $V_{RSRP}$ is a weighted value corresponding to the RSRP, $V_{SINR}$ is a weighted value corresponding to the SINR, $V_{some\_item}$ is a weighted value corresponding to another optional indicator, and $\alpha_2, \alpha_2, ..., \alpha_n$ are weighting factors, which can be set according to an actual requirement and meet $\alpha_1 + \alpha_2 + \cdots + \alpha_n = 1, 0 \leq \alpha_i \leq 1, 1 \leq i \leq n$.

Because each indicator corresponds to a different interval, in order to obtain a fitted value through a computation in a same interval, it is necessary to transform each indicator value to obtain a corresponding weighted value, so that value intervals of different indicators are the same.

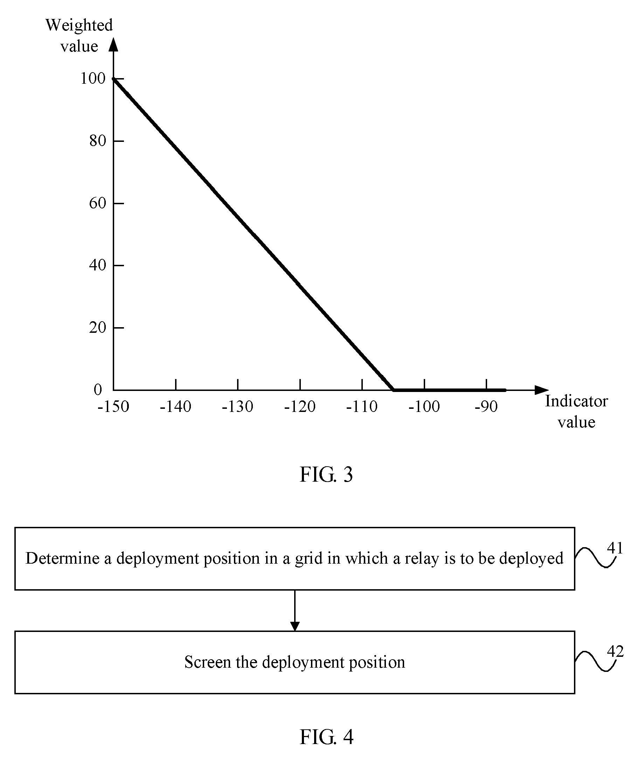

For a computation of the weighted value, reference may be made to a linear computation in FIG. 3. Certainly, the weighted value may also be computed by adopting a nonlinear computation, as long as the weighted value corresponding to each indicator is in a same value interval. In FIG. 3, a horizontal coordinate represents an indicator value obtained by collecting sampling points, and a vertical coordinate is a corresponding weighted value. Through linear transformation shown in FIG. 3, the value interval of the indicator value may be transformed into 0-100.

After a fitted value of each sampling point is obtained, an indicator value $fitValue$ of a grid may be obtained according to the fitted value, where the indicator value of the grid may be obtained through linear or nonlinear fitting performed for the fitted values of the sampling points corresponding to the grid. For example, $fitValue = \sum fitValue_i$.

After the indicator value $fitValue$ of the grid is obtained, it may be determined, according to the indicator value of the grid, whether the grid is the grid in which a relay needs to be deployed.

Specifically, it may be that an RSRP value $fitValue_{RSRP}$ and an SINR value $fitValue_{SINR}$ of the grid are selected, and then it is determined, according to the RSRP value and the SINR value of the grid, whether a relay needs to be deployed in the grid.

For example, for each sampling point, $\alpha_1$ in the foregoing formula may be set to 1, and other $\alpha_i$ is set to 0, and an RSRP value of each sampling point is obtained. Then, RSRP values of the sampling points are fitted to obtain the RSRP value of the grid, which is represented by $fitValue_{RSRP}$. The SINR value $fitValue_{SINR}$ of the grid may also be obtained in a similar manner.

Then, if the $fitValue_{RSRP}$ of the grid is between a preset lowest threshold *RsrpThresholdLow* and a preset highest threshold *RsrpThresholdHigh*, and the $fitValue_{SINR}$ of the grid is greater than a preset threshold *SINRThreshold*, it is determined that the grid is the grid in which a relay needs to be deployed.

After the grid in which a relay needs to be deployed is determined, a position of a relay deployed may be determined according to positions of the sampling points in the grid.

Specifically, the position of the relay deployed in the grid may be a center-of-gravity position of the sampling points of the grid, and a computational formula may be:

$$x = \frac{\sum_i fitValue_i \times x_i}{\sum_i fitValue_i}, y = \frac{\sum_i fitValue_i \times y_i}{\sum_i fitValue_i},$$

where (*x,y*) are a horizontal coordinate and a vertical coordinate of the position of the relay deployed in the grid and are also center-of-gravity coordinates of the sampling points in the grid, and $x_i$ and $y_i$ are position coordinates of a sampling point *i* in the grid.

Through the foregoing processing, this embodiment can implement automatic site selection for a relay node or a small-cell base station, thereby avoiding a problem caused by manual selection.

Further, because of a limitation of practical factors, it may be necessary to further screen the determined center-of-gravity position to obtain an optimal deployment position.

FIG. 4 is a schematic flowchart of a method according to a second embodiment of the present invention, where the method includes:

Step 41: Determine a deployment position in a grid in which a relay needs to be deployed.

For specific content, reference may be made to steps 11-13 of the previous embodiment.

Step 42: Screen the deployment position.

The screening may be performed according to different screening principles. For example, the screening may be performed according to at least one of the following screening principles: screening based on a limited condition, screening based on special area isolation, and screening based on traffic distribution.

The screening based on a limited condition may be that: a deployed relay should not be extremely close to a macro base station, a spacing between relays meets a certain condition, relays in a short distance are combined, and the like.

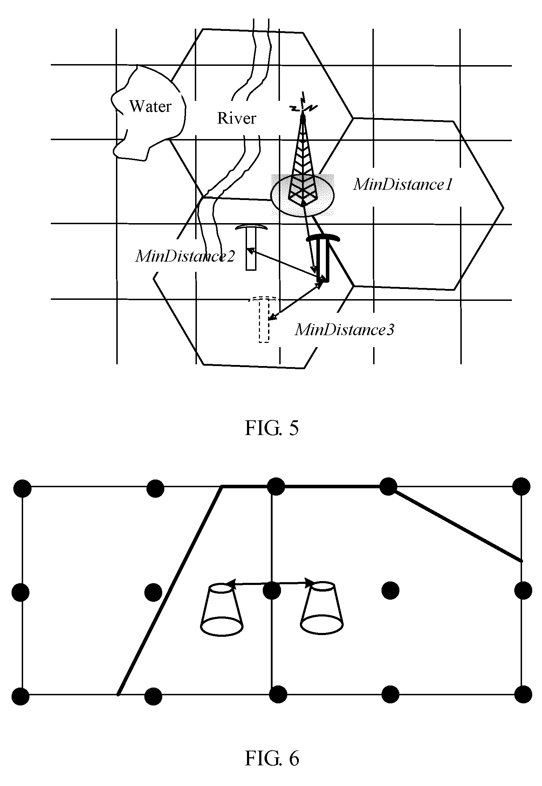

Specifically, referring to FIG. 5, screening conditions include the following: A distance between a position of the relay to be deployed and a closest LTE macro base station should not be smaller than a preset first threshold MinDistance1, a distance between the position of the relay to be deployed and an existing relay should not be smaller than a preset second threshold MinDistance2, and a distance between the position of the relay to be deployed and another relay to be deployed should not be smaller than a preset third threshold MinDistance3.

In addition, in an area where signals are weak, a situation in which a distance between relays to be deployed is extremely short may occur, and there is strong interference between the relays with an extremely short distance. In order to avoid the interference, a combining operation may be performed for two relays to be deployed with a spacing smaller than a relay coverage radius. As shown in FIG. 6, an initial position between two relays to be deployed, where a distance between the two relays is smaller than the relay coverage radius, is determined as the position of the relay to be deployed, to replace the initial position of the two relays to be deployed.

The screening based on special area isolation may be that: if the position of the relay to be deployed is a lake, a river, a highway, a high-rise building, or the like, another position needs to be selected. The another position may be selected in the following manner: Four sampling points closest to the initial position of the relay to be deployed are selected, indicator values *fitValue* of the four sampling points are obtained, and a position of a sampling point with a highest indicator value is determined as a new position for deploying the relay. If the new position for deploying the relay is still the special area, relay deployment in the position may be abandoned.

The screening based on traffic distribution may be that: geographic traffic distribution of an LTE macro base station itself or an existing system such as a 2G/3G system is obtained by positioning, and if a traffic volume in a coverage range in which the relay is to be deployed is smaller than a preset threshold, another position needs to be selected. The another position may be selected in the following manner: Four sampling points closest to the initial position for deploying the relay are selected, indicator values *fitValue* of the four sampling points are obtained, and a position of a sampling point with a highest indicator value is determined as a new position for deploying the relay. If the traffic volume in the new coverage range in which the relay is to be deployed is greater than the threshold, the initial position is replaced with the new position for deploying the relay; or otherwise, if the traffic volume is still smaller than the threshold, relay deployment in the position may be abandoned.

Screening has been performed in the foregoing, and further, selection may further be performed.

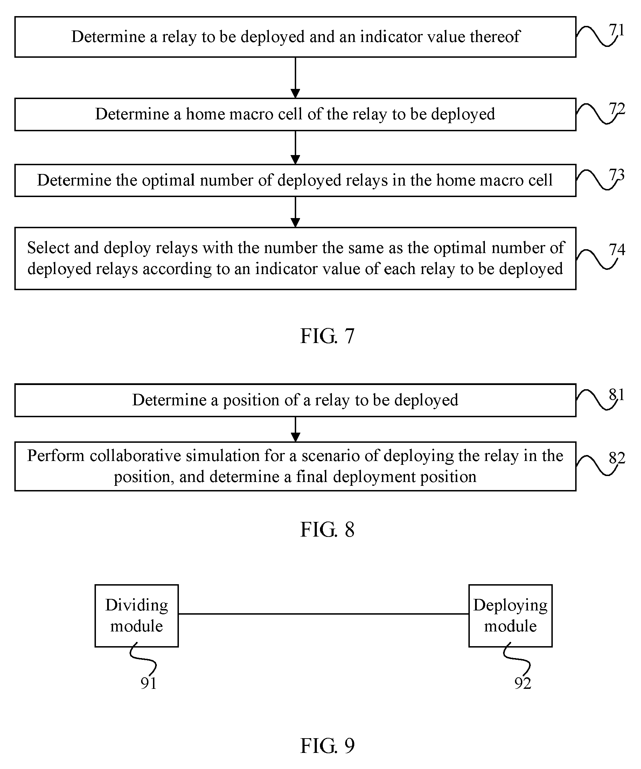

FIG. 7 is a schematic flowchart of a method according to a third embodiment of the present invention, where the method includes:

Step 71: Determine a relay to be deployed and an indicator value thereof.

A position of the relay to be deployed may be the center-of-gravity position obtained in the first embodiment or the position obtained by screening the center-of-gravity position in the second embodiment.

The indicator value *fitValue* of the relay to be deployed is an indicator value of a center-of-gravity position of a grid, and a computational manner of the indicator value may be obtained by referring to the manner of fitting the indicator values of the points in the foregoing.

Step 72: Determine a home macro cell of the relay to be deployed.

The home macro cell may be determined by using a transmission model suitable for backhaul transmission.

For example, a candidate macro cell set may be established first, and the candidate macro cell set may include home macro cells of all sampling points in a grid.

An SINR from a center-of-gravity point of the grid to each macro cell in the candidate macro cell set is computed.

If the number of relays that have been deployed in a macro cell with a best SINR is smaller than a set number, the macro cell with a minimum SINR is selected as the home macro cell; and if the number of relays that have been deployed in the home macro cell is greater than the set number, the number of relays that have been deployed in a macro cell with a next-best SINR may be determined continuously until the home macro cell is determined. The set number may be 5.

Step 73: Determine the optimal number of deployed relays in the home macro cell.

The optimal number of deployed relays in each home macro cell may be determined in a simulation manner.

For example, for each home macro cell, capacity simulation is performed for the macro cell when no relay accesses the home macro cell, to obtain a capacity simulation result $Result_0$;

capacity simulation is performed for the macro cell when one relay accesses the home macro cell, to obtain another capacity simulation result $Result_1$;

capacity simulation is performed accordingly until capacity simulation is performed for the macro cell when n relays accesses the home macro cell, to obtain $Result_n$, where n is the number, obtained by determining the home macro cell of the relay, of relays that need to access each home macro cell; and

the simulation results $Result_0$, $Result_1$, ..., and $Result_n$ are compared, and an access number $k$ corresponding to an optimal result $Result_k$ is determined as the optimal number of deployed relays.

The capacity simulation may include simulation of access control, power control, resource scheduling, interference coordination, and so on. The simulation result $Result_i$ may be an indicator of the macro cell such as total throughput, edge throughput, or a call drop rate. Specific content of the capacity simulation, the simulation result to be determined, and a definition of an optimal simulation result may be determined according to an actual requirement. For example, the simulation result includes total throughput and a call drop rate, and if a required indicator is an optimal total throughput, the optimal simulation result refers to a result of highest total throughput even if the call drop rate at this time is not the lowest.

Step 74: Select and deploy relays with the number the same as the optimal number of deployed relays according to an indicator value of each relay to be deployed.

A priority of each relay may be marked by the indicator value. Assuming that the optimal number of deployed relays is N, N relays with relatively high priorities are selected for access.

Further, after the selection, a simulation test may further be performed.

FIG. 8 is a schematic flowchart of a method according to a fourth embodiment of the present invention, where the method includes:

Step 81: Determine a position of a relay to be deployed.

The position of the relay to be deployed may be, for example, the position obtained in the first embodiment, the position obtained after screening in the second embodiment, or the position obtained after priority sorting and selecting in the third embodiment.

Further, after the position is obtained, screening may further be performed through a survey, an investigation, and verification. For example, manual site survey is performed for a live network map, and if the position is suitable for deployment, deployment is performed.

Step 82: Perform collaborative simulation in a scenario of deploying the relay in the position, and determine a final deployment position.

It may be assumed that the collaborative simulation is performed for an LTE macro base station and the position separately before and after the relay is deployed, to obtain collaborative simulation results. The simulation results before and after the relay is deployed are compared, and if performance after the comparison meets a requirement, it is determined that the position is the final position for deploying the relay. The collaborative simulation means performing communication performance simulation for the deployed relay and the LTE macro base station according to a protocol model.

In this embodiment of the present invention, impact of many practical factors is considered, so that interference caused by a newly-added relay may be minimized, leading to a great improvement of channel quality and significantly reducing costs and defects of manual site selection. N relays are selected and deployed preferentially, and a relay with a highest priority may be deployed first under the premise of fixed investment. In this way, a coverage range is larger, the channel quality is better improved, a cell capacity is enhanced on a larger scale, and an operator can obtain returns on investment faster.

FIG. 9 is a schematic structural diagram of a device according to a fifth embodiment of the present invention, where the device includes a dividing module 91 and a deploying module 92. The dividing module 91 is configured to divide a to-be-analyzed area in which a station is to be deployed, into multiple grids; and the deploying module 92 is configured to perform signal collection for sampling points in each grid, determine, according to collected signal indicator values, a grid in which a station needs to be deployed, and deploy, in the grid in which a station needs to be deployed, a station needing to be deployed.

Optionally, the dividing module includes: a determining unit, configured to determine a minimum rectangle including an area in which a station is to be deployed, as the to-be-analyzed area; and a dividing unit, configured to divide the minimum rectangle according to a transmission radius of the station, to obtain multiple grids.

Optionally, the dividing unit is specifically configured to perform segmentation processing for the minimum rectangle at an interval of N to obtain multiple grids, where $\sqrt{2}R \leq N \leq 2R$, and R is the transmission radius of the station.

The deploying module is specifically configured to: sample points corresponding to each grid at an interval of a map resolution, to obtain multiple signal indicator values of each sampling point; obtain a fitted value of each sampling point according to the multiple signal indicator values; obtain an indicator value of a grid according to the fitted value of each sampling point, where the indicator value of the grid includes an RSRP value of the grid and an SINR value of the grid; and if the RSRP value of the grid is between a set lowest threshold and a set highest threshold, and the SINR value of the grid is greater than a set threshold, determine that the grid is the grid in which a station needs to be deployed.

Optionally, the deploying module is further specifically configured to determine a center-of-gravity position of sampling points in the grid in which a station needs to be deployed, as a deployment position of the station needing to be deployed, and a computational formula of the center-of-gravity position is: $x = \dfrac{\sum_i fitValue_i \times x_i}{\sum fitValue_i}$,

$y = \dfrac{\sum_i fitValue_i \times y_i}{\sum fitValue_i}$, where (x,y) are position coordinates of the center-of-gravity position, ($x_i$, $y_i$) are position coordinates of a sampling point i in the grid, and $fitValue_i$ is a fitted value of the sampling point i.

Optionally, the device may further include a screening module, configured to screen, according to at least one of the following principles, the deployment position obtained by the determining module, to obtain a screened position of a station needing to be deployed: screening based on a limited condition, screening based on special area isolation, and screening based on traffic distribution.

The device may further include: a priority selection module, configured to determine a home macro cell of the station needing to be deployed, which is obtained by the screening module; determine the optimal number of deployed stations in the home macro cell; and select and deploy stations with the number the same as the optimal number of deployed stations according to an indicator value of each station needing to be deployed.

The device may further include a simulation module, configured to perform simulation for communication performance before the station is deployed and after the station is deployed, and if a set condition is met by comparing simulation results, determine the position for deploying the station as a final actual deployment position.

Optionally, the priority selection module is specifically configured to:

form a candidate macro cell set by using home macro cells of the sampling points in the grid in which a station needs to be deployed;

compute an SINR between the center-of-gravity position of the grid in which a station needs to be deployed and each macro cell in the candidate macro cell set;

determine a home macro cell according to an SINR value and the number of stations accessing each macro cell in the candidate macro cell set;

perform capacity simulation for each home macro cell when different numbers of stations access the home macro cell, to obtain capacity simulation results corresponding to different numbers of stations; and

determine the number of stations when a capacity simulation result meets a set condition, as the optimal number of deployed stations.

The station in this embodiment may be a relay node or a small-cell base station. For a specific process of each module, reference may be made to content in the foregoing method.

In this embodiment, grid dividing is performed for an area in which a relay node or a small-cell base station is to be deployed, points in a grid are sampled, a grid in which a relay node or a small-cell base station needs to be deployed is determined according to indicator values obtained by sampling, and a center-of-gravity position of sampling points in the grid in which a relay node or a small-cell base station needs to be deployed is determined as a deployment position of the relay node or the small-cell base station, thereby implementing automatic site selection for the relay node or the small base.

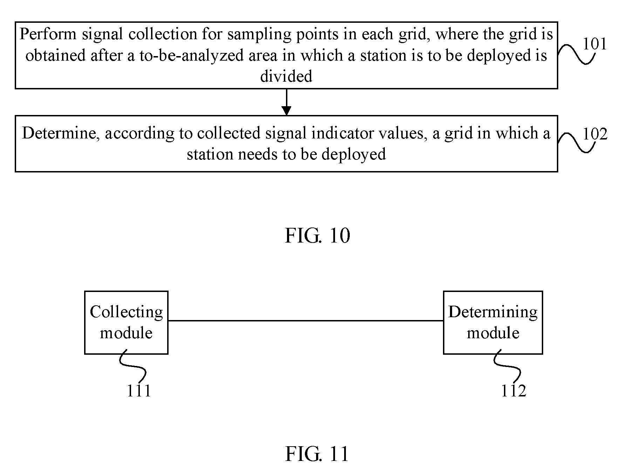

In addition, the present invention further provides a grid selection method. Referring to FIG. 10, the method includes:

Step 101: Perform signal collection for sampling points in each grid, where the grid is obtained after a to-be-analyzed area in which a station is to be deployed is divided.

This step may be sampling points corresponding to each grid at an interval of a map resolution, to obtain multiple signal indicator values of each sampling point.

Step 102: Determine, according to collected signal indicator values, a grid in which a station needs to be deployed.

This step may be obtaining a fitted value of each sampling point according to the multiple signal indicator values; obtaining an indicator value of a grid according to the fitted value of each sampling point, where the indicator value of the grid includes an RSRP value of the grid and an SINR value of the grid; and if the RSRP value of the grid is between a set lowest threshold and a set highest threshold, and the SINR value of the grid is greater than a set threshold, determining that the grid is the grid in which a station needs to be deployed.

Correspondingly, the present invention further provides a grid selection device. As shown in FIG. 11, the device includes a collecting module 111 and a determining module 112. The collecting module 111 is configured to perform signal collection for sampling points in each grid, where the grid is obtained after a to-be-analyzed area in which a station is to be deployed is divided; and the determining module 112 is configured to determine, according to collected signal indicator values, a grid in which a station needs to be deployed.

This may be as follows: The collecting module is specifically configured to sample points corresponding to each grid at an interval of a map resolution, to obtain multiple signal indicator values of each sampling point; and the determining module is specifically configured to obtain a fitted value of each sampling point according to the multiple signal indicator values; obtain an indicator value of a grid according to the fitted value of each sampling point, where the indicator value of the grid includes an RSRP value of the grid and an SINR value of the grid; and if the RSRP value of the grid is between a set lowest threshold and a set highest threshold, and the SINR value of the grid is greater than a set threshold, determine that the grid is the grid in which a station needs to be deployed.

The station may be a relay node or a small-cell base station.

Determination of a grid in which a station needs to be deployed can be implemented in this embodiment, so as to provide a basis for station deployment.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

Claims

1. A site selection method, comprising:

dividing (11) a to-be-analyzed area in which a station is to be deployed, into multiple grids, wherein the station is a relay node or a small-cell base station in a long term evolution-advanced, LTE-A, system;
obtaining (12, 101) sampling points corresponding to each grid by sampling at an interval of a map resolution;
obtaining (12, 101) multiple signal indicator values of each sampling point, wherein the multiple signal indicator values include a reference signal received power, RSRP, and a signal to interference plus noise ratio, SINR;
obtaining (12, 101) a fitted value of each sampling point according to the multiple signal indicator values;

obtaining (12, 101) an RSRP value and an SINR value of each grid according to the fitted value of each sampling point;

if the RSRP value of a grid is between a set lowest threshold and a set highest threshold, and the SINR value of the grid is greater than a set threshold, determining (102) the grid is a grid in which the station needs to be deployed; and

deploying (12) the station in the grid.

2. The method according to claim 1, wherein the dividing a to-be-analyzed area in which a station is to be deployed, into multiple grids comprises:

determining a minimum rectangle comprising an area in which a station is to be deployed, as the to-be-analyzed area; and

dividing the minimum rectangle according to a transmission radius of the station, to obtain multiple grids.

3. The method according to claim 2, wherein the dividing the minimum rectangle according to a transmission radius of the station, to obtain multiple grids comprises:

performing segmentation processing for the minimum rectangle at an interval of N to obtain multiple grids, wherein $\sqrt{2}R \leq N \leq 2R$, and R is the transmission radius of the station.

4. The method according to claim 1, wherein the deploying the station in the grid comprises:

determining (41) a center-of-gravity position of sampling points in the grid in which the station needs to be deployed, as a deployment position of the station needing to be deployed, wherein a computational formula of the center-of gravity position is:

$$x = \frac{\sum_i fitValue_i \times x_i}{\sum fitValue_i}, y = \frac{\sum_i fitValue_i \times y_i}{\sum fitValue_i},$$

wherein $(x,y)$ are position coordinates of the center-of-gravity position, $(x_i, y_i)$ are position coordinates of a sampling point $i$ in the grid, and $fitValue_i$ is a fitted value of the sampling point $i$.

5. The method according to claim 4, further comprising:

screening (42) the deployment position according to at least one of the following principles, to obtain a screened position of the station needing to be deployed: screening based on a limited condition, screening based on special area isolation, and screening based on traffic distribution.

6. The method according to claim 5, further comprising:

determining (72) a home macro cell of the station needing to be deployed;

determining (73) the optimal number of deployed stations in the home macro cell; and

selecting and deploying (74) stations with the number the same as the optimal number of deployed stations according to an indicator value of each station needing to be deployed.

7. The method according to claim 6, further comprising:

performing (82) simulation for communication performance before the station is deployed and after the station is deployed, and if a set condition is met by comparing simulation results, determining (82) the position for deploying the station as a final actual deployment position.

8. The method according to claim 6, wherein the determining a home macro cell of the station needing to be deployed comprises:

forming a candidate macro cell set by using home macro cells of the sampling points in the grid in which a station needs to be deployed;

computing an SINR between the center-of-gravity position of the grid in which a station needs to be deployed and each macro cell in the candidate macro cell set; and

determining a home macro cell according to an SINR value and the number of stations accessing each macro cell in the candidate macro cell set.

9. The method according to claim 6, wherein the determining the optimal number of deployed stations in the home macro cell comprises:

performing capacity simulation for each home macro cell when different numbers of stations access the home macro cell, to obtain capacity simulation results corresponding to different numbers of stations; and

determining the number of stations when a capacity simulation result meets a set condition, as the optimal number of deployed stations.

10. A site selection device, comprising:

a dividing module (91), configured to divide a to-be-analyzed area in which a station is to be deployed, into multiple grids, wherein the station is a relay node or a small-cell base station in a long term evolution-advanced, LTE-A, system; and

a deploying module (92), configured to:

obtain sample points corresponding to each grid by sampling at an interval of a map resolution,

obtain multiple signal indicator values of each sampling point, wherein the multiple signal indicator values include a reference signal received power, RSRP, and a signal to interference plus noise ratio, SINR,

obtain a fitted value of each sampling point according to the multiple signal indicator values,

obtain an RSRP value and an SINR value of each grid according to the fitted value of each sampling point,

if the RSRP value of a grid is between a set lowest threshold and a set highest threshold, and the SINR value of the grid is greater than a set threshold, determine the grid is a grid in which the station needs to be deployed, and

deploy the station in the grid.

11. The device according to claim 10, wherein the dividing module comprises:

a determining unit, configured to determine a minimum rectangle comprising an area in which a station needs to be deployed, as the to-be-analyzed area; and

a dividing unit, configured to divide the minimum rectangle according to a transmission radius of the station, to obtain multiple grids.

12. The device according to claim 11, wherein the dividing unit is specifically configured to:

perform segmentation processing for the minimum rectangle at an interval of N to obtain multiple grids, wherein $\sqrt{2}R \leq N \leq 2R$, and R is the transmission radius of the station.

13. The device according to claim 10, wherein the deploying module is further specifically configured to:

determine a center-of-gravity position of sampling points in the grid in which the station needs to be deployed, as a deployment position of the station needing to be deployed, wherein a computational formula of the center-of gravity position is:

$$x = \frac{\sum_i fitValue_i \times x_i}{\sum_i fitValue_i}, y = \frac{\sum_i fitValue_i \times y_i}{\sum_i fitValue_i},$$

wherein $(x, y)$ are position coordinates of the center-of-gravity position, $(x_i, y_i)$ are position coordinates of a sampling point $i$ in the grid, and $fitValue_i$ is a fitted value of the sampling point $i$.

**14.** The device according to claim 13, further comprising:

a screening module, configured to screen, according to at least one of the following principles, the deployment position obtained by the determining module, to obtain a screened position of the station needing to be deployed: screening based on a limited condition, screening based on special area isolation, and screening based on traffic distribution.

**15.** The device according to claim 14, further comprising:

a priority selection module, configured to determine a home macro cell of the station needing to be deployed, which is obtained by the screening module; determine the optimal number of deployed stations in the home macro cell; and select and deploy stations with the number the same as the optimal number of deployed stations according to an indicator value of each station needing to be deployed.

**16.** The device according to claim 15, further comprising:

a simulation module, configured to perform simulation for communication performance before the station is deployed and after the station is deployed, and if a set condition is met by comparing simulation results, determine the position for deploying the station as a final actual deployment position.

**17.** The device according to claim 15, wherein the priority selection module is specifically configured to:

form a candidate macro cell set by using home macro cells of the sampling points in the grid in which a station needs to be deployed;
compute an SINR between the center-of-gravity position of the grid in which a station needs to be deployed and each macro cell in the candidate macro cell set;
determine a home macro cell according to an SINR value and the number of stations accessing each macro cell in the candidate macro cell set;
perform capacity simulation for each home macro cell when different numbers of stations access the home macro cell, to obtain capacity simulation results corresponding to different numbers of stations; and
determine the number of stations when a capacity simulation result meets a set condition, as the optimal number of deployed stations.

**Patentansprüche**

**1.** Standortauswahlverfahren, das Folgendes umfasst:

Unterteilen (11) einer Fläche, die analysiert werden soll, in der eine Station eingesetzt werden soll, in mehrere Raster,
wobei die Station ein Relaisknoten oder eine Basisstation einer kleinen Zelle in einem verbesserten Langzeitentwicklungssystem, LTE-A-System, ist;
Erhalten (12, 101) von Abtastpunkten, die jedem Raster entsprechen, durch Abtasten mit einem Abstand einer Kartenauflösung;
Erhalten (12, 101) mehrerer Signalindikatorwerte jedes Abtastpunkts, wobei die mehreren Signalindikatorwerte eine Referenzsignalempfangsleistung, RSRP, und ein Signal-zu-Stören-plus-Rauschen-Verhältnis, SINR, enthalten;
Erhalten (12, 101) eines angepassten Werts jedes Abtastpunkts gemäß den mehreren Signalindikatorwerten;
Erhalten (12, 101) eines RSRP-Werts und eines SINR-Werts jedes Rasters gemäß dem angepassten Wert jedes Abtastpunkts;

falls der RSRP-Wert eines Rasters zwischen einem eingestellten tiefsten Schwellenwert und einem eingestellten höchsten Schwellenwert ist und der SINR-Wert des Rasters größer ist als ein eingestellter Schwellenwert, Bestimmen (102), dass das Raster ein Raster ist, in dem die Station eingesetzt werden muss; und Einsetzen (12) der Station in das Raster.

2. Verfahren nach Anspruch 1, wobei das Unterteilen einer Fläche, die analysiert werden soll, in der eine Station eingesetzt werden soll, in mehrere Raster Folgendes umfasst:

Bestimmen eines kleinsten Rechtecks, das eine Fläche umfasst, in der eine Station eingesetzt werden soll, als die Fläche, die analysiert werden soll; und Unterteilen des kleinsten Rechtecks gemäß einem Senderadius der Station, um mehrere Raster zu erhalten.

3. Verfahren nach Anspruch 2, wobei das Unterteilen des kleinsten Rechtecks gemäß einem Senderadius der Station, um mehrere Raster zu erhalten, Folgendes umfasst:

Ausführen von Segmentierungsverarbeitung für das kleinste Rechteck mit einem Abstand N, um mehrere Raster zu erhalten, wobei $\sqrt{2}R \leq N \leq 2R$ ist und R der Senderadius der Station ist.

4. Verfahren nach Anspruch 1, wobei das Einsetzen der Station in das Raster Folgendes umfasst:

Bestimmen (41) einer Schwerpunktposition von Abtastpunkten in dem Raster, in dem die Station eingesetzt werden muss, als eine Einsetzposition der Station, die eingesetzt werden muss, wobei eine Berechnungsformel für die Schwerpunktposition ist:

$$x = \frac{\sum_i fitValue_i \times x_i}{\sum fitValue_i} , y == \frac{\sum_i fitValue_i \times y_i}{\sum fitValue_i} ,$$

wobei ($x$, y) die Positionskoordinaten der Schwerpunktposition sind, ($x_i$, $y_i$) Positionskoordinaten eines Abtastpunkts $i$ in dem Raster sind und $fitValue_i$ ein angepasster Wert des Abtastpunkts $i$ ist.

5. Verfahren nach Anspruch 4, das ferner Folgendes umfasst:

Überprüfen (42) der Einsetzposition gemäß wenigstens einem der folgenden Prinzipien, um eine überprüfte Position der Station, die eingesetzt werden muss, zu erhalten: Überprüfen basierend auf einer Grenzbedingung, Überprüfen basierend auf spezieller Flächenisolierung und Überprüfen basierend auf Verkehrsverteilung.

6. Verfahren nach Anspruch 5, das ferner Folgendes umfasst:

Bestimmen (72) einer Heimat-Makrozelle der Station, die eingesetzt werden muss; Bestimmen (73) der optimalen Anzahl von eingesetzten Stationen in der Heimat-Makrozelle; und Auswählen und Einsetzen (74) von Stationen mit der Anzahl gleich der optimalen Anzahl von eingesetzten Stationen gemäß einem Indikatorwert jeder Station, die eingesetzt werden muss.

7. Verfahren nach Anspruch 6, das ferner Folgendes umfasst:

Ausführen (82) von Simulation für Kommunikationsleistung, bevor die Station eingesetzt wird und nachdem die Station eingesetzt worden ist, und, falls eine eingestellte Bedingung durch Vergleichen von Simulationsergebnissen erfüllt ist, Bestimmen (82) der Position zum Einsetzen der Station als eine endgültige tatsächliche Einsetzposition.

8. Verfahren nach Anspruch 6, wobei das Bestimmen einer Heimat-Makrozelle der Station, die eingesetzt werden muss, Folgendes umfasst:

Bilden einer Kandidaten-Makrozellengruppe durch Verwenden von Heimat-Makrozellen der Abtastpunkte in dem Raster, in dem eine Station eingesetzt werden muss;
Berechnen eines SINR zwischen der Schwerpunktposition des Rasters, in dem eine Station eingesetzt werden muss, und jeder Makrozelle in der Kandidaten-Makrozellengruppe; und
Bestimmen einer Heimat-Makrozelle gemäß einem SINR-Wert und der Anzahl von Stationen, die auf jede Makrozelle in der Kandidaten-Makrozellengruppe zugreifen.

9. Verfahren nach Anspruch 6, wobei das Bestimmen der optimalen Anzahl von eingesetzten Stationen in der Heimat-Makrozelle Folgendes umfasst:

Ausführen von Kapazitätssimulation für jede Heimat-Makrozelle, wenn eine unterschiedliche Anzahl von Stationen auf die Heimat-Makrozelle zugreift, um Kapazitätssimulationsergebnisse zu erhalten, die einer unterschiedlichen Anzahl von Stationen entsprechen; und
Bestimmen der Anzahl von Stationen, wenn ein Kapazitätssimulationsergebnis eine eingestellte Bedingung erfüllt, als die optimale Anzahl von eingesetzten Stationen.

10. Standortauswahlvorrichtung, die Folgendes umfasst:

ein Unterteilungsmodul (91), das konfiguriert ist, eine Fläche, die analysiert werden soll, in der eine Station eingesetzt werden soll, in mehrere Raster zu unterteilen, wobei die Station ein Relaisknoten oder eine Basisstation einer kleinen Zelle in einem verbesserten Langzeitentwicklungssystem, LTE-A-System, ist; und
ein Einsetzungsmodul (92), das konfiguriert ist:

Abtastpunkte, die jedem Raster entsprechen, durch Abtasten mit einem Abstand einer Kartenauflösung zu erhalten,
mehrere Signalindikatorwerte jedes Abtastpunkts zu erhalten, wobei die mehreren Signalindikatorwerte eine Referenzsignalempfangsleistung, RSRP, und ein Signal-zu-Stören-plus-Rauschen-Verhältnis, SINR, enthalten,
einen angepassten Wert jedes Abtastpunkts gemäß den mehreren Signalindikatorwerten zu erhalten,
einen RSRP-Wert und einen SINR-Wert jedes Rasters gemäß dem angepassten Wert jedes Abtastpunkts zu erhalten,
falls der RSRP-Wert eines Rasters zwischen einem eingestellten tiefsten Schwellenwert und einem eingestellten höchsten Schwellenwert ist und der SINR-Wert des Rasters größer ist als ein eingestellter Schwellenwert, zu bestimmen, dass das Raster ein Raster ist, in dem die Station eingesetzt werden muss, und die Station in das Raster einzusetzen.

11. Vorrichtung nach Anspruch 10, wobei das Unterteilungsmodul Folgendes umfasst:

eine Bestimmungseinheit, die konfiguriert ist, ein kleinstes Rechteck, das eine Fläche umfasst, in der eine Station eingesetzt werden muss, als die Fläche zu bestimmen, die analysiert werden soll; und
eine Unterteilungseinheit, die konfiguriert ist, das kleinste Rechteck gemäß einem Senderadius der Station zu unterteilen, um mehrere Raster zu erhalten.

12. Vorrichtung nach Anspruch 11, wobei die Unterteilungseinheit insbesondere konfiguriert ist:

Segmentierungsverarbeitung für das kleinste Rechteck mit einem Abstand N auszuführen, um mehrere Raster zu erhalten, wobei $\sqrt{2}R \le N \le 2R$ ist und R der Senderadius der Station ist.

13. Vorrichtung nach Anspruch 10, wobei das Einsetzungsmodul ferner insbesondere konfiguriert ist:

eine Schwerpunktposition von Abtastpunkten in dem Raster, in dem die Station eingesetzt werden muss, als eine Einsetzposition der Station, die eingesetzt werden muss, zu bestimmen, wobei eine Berechnungsformel für die Schwerpunktposition ist:

$$x = \frac{\sum_i fitValue_i \times x_i}{\sum fitValue_i}, \quad y == \frac{\sum_i fitValue_i \times y_i}{\sum fitValue_i},$$

wobei $(x, y)$ die Positionskoordinaten der Schwerpunktposition sind, $(x_i, y_i)$ Positionskoordinaten eines Abtast-punkts $i$ in dem Raster sind und $fitValue_i$ ein angepasster Wert des Abtastpunkts $i$ ist.

**14.** Vorrichtung nach Anspruch 13, die ferner Folgendes umfasst:

ein Überprüfungsmodul, das konfiguriert ist, gemäß wenigstens einem der folgenden Prinzipien die Einsetzposition, die durch das Bestimmungsmodul erhalten ist, zu überprüfen, um eine überprüfte Position der Station, die eingesetzt werden muss, zu erhalten: Überprüfen basierend auf einer Grenzbedingung, Überprüfen basierend auf spezieller Flächenisolierung und Überprüfen basierend auf Verkehrsverteilung.

**15.** Vorrichtung nach Anspruch 14, die ferner Folgendes umfasst:

ein Prioritätsauswahlmodul, das konfiguriert ist, eine Heimat-Makrozelle der Station, die eingesetzt werden muss, die durch das Überprüfungsmodul erhalten ist, zu bestimmen; die optimale Anzahl von eingesetzten Stationen in der Heimat-Makrozelle zu bestimmen; und Stationen mit der Anzahl gleich der optimalen Anzahl von eingesetzten Stationen gemäß einem Indikatorwert jeder Station, die eingesetzt werden muss, auszuwählen und einzusetzen.

**16.** Vorrichtung nach Anspruch 15, die ferner Folgendes umfasst:

ein Simulationsmodul, das konfiguriert ist, Simulation für Kommunikationsleistung auszuführen, bevor die Station eingesetzt wird und nachdem die Station eingesetzt worden ist, und, falls eine eingestellte Bedingung durch Vergleichen von Simulationsergebnissen erfüllt ist, die Position zum Einsetzen der Station als eine endgültige tatsächliche Einsetzposition zu bestimmen.

**17.** Vorrichtung nach Anspruch 15, wobei das Prioritätsauswahlmodul insbesondere konfiguriert ist:

eine Kandidaten-Makrozellengruppe durch Verwenden von Heimat-Makrozellen der Abtastpunkte in dem Raster, in dem eine Station eingesetzt werden muss, zu bilden;
ein SINR zwischen der Schwerpunktposition des Rasters, in dem eine Station eingesetzt werden muss, und jeder Makrozelle in der Kandidaten-Makrozellengruppe zu berechnen;
eine Heimat-Makrozelle gemäß einem SINR-Wert und der Anzahl von Stationen, die auf jede Makrozelle in der Kandidaten-Makrozellengruppe zugreifen, zu bestimmen;
Kapazitätssimulation für jede Heimat-Makrozelle auszuführen, wenn eine unterschiedliche Anzahl von Stationen auf die Heimat-Makrozelle zugreift, um Kapazitätssimulationsergebnisse zu erhalten, die einer unterschiedlichen Anzahl von Stationen entsprechen; und
die Anzahl von Stationen, wenn ein Kapazitätssimulationsergebnis eine eingestellte Bedingung erfüllt, als die optimale Anzahl von eingesetzten Stationen zu bestimmen.

**Revendications**

**1.** Procédé de sélection de site, comprenant les étapes suivantes :

diviser (11) une zone à analyser, dans laquelle une station doit être déployée, en plusieurs grilles, la station étant un noeud relais ou une station de base petite cellule dans un système de technologie d'évolution à long terme avancée, LTE-A ;
obtenir (12, 101) des points d'échantillonnage correspondant à chaque grille en échantillonnant à un intervalle d'une résolution de carte ;
obtenir (12, 101) plusieurs valeurs d'indicateur de signal de chaque point d'échantillonnage, les multiples valeurs d'indicateur de signal comportant une puissance reçue de signal de référence, RSRP, et un rapport signal / interférences plus bruit, SINR ;
obtenir (12, 101) une valeur ajustée de chaque point d'échantillonnage selon les multiples valeurs d'indicateur de signal ;
obtenir (12, 101) une valeur RSRP et une valeur SINR de chaque grille selon la valeur ajustée de chaque point d'échantillonnage ;
si la valeur RSRP d'une grille est comprise entre un seuil inférieur défini et un seuil supérieur défini, et que la valeur SINR de la grille est supérieure à un seuil défini, déterminer (102) que la grille est une grille dans laquelle la station doit être déployée ; et
déployer (12) la station dans la grille.

2. Procédé selon la revendication 1, dans lequel l'étape consistant à diviser une zone à analyser dans laquelle une station doit être déployée, en plusieurs grilles comprend :

   déterminer un rectangle minimum comportant une zone dans laquelle une station doit être déployée, comme la zone à analyser ; et
   diviser le rectangle minimum selon un rayon de transmission de la station, pour obtenir plusieurs grilles.

3. Procédé selon la revendication 2, dans lequel l'étape consistant à diviser le rectangle minimum selon un rayon de transmission de la station, pour obtenir plusieurs grilles comprend :

   exécuter un traitement de segmentation pour le rectangle minimum à un intervalle de N pour obtenir plusieurs grilles, où $\sqrt{2}R \leq N \leq 2R$, et R est le rayon de transmission de la station.

4. Procédé selon la revendication 1, dans lequel l'étape consistant à déployer la station dans la grille comprend :

   déterminer (41) une position de centre de gravité de points d'échantillonnage dans la grille dans laquelle la station doit être déployée, comme une position de déploiement de la station devant être déployée, une formule de calcul de la position de centre de gravité étant :

$$x = \frac{\sum_i fitValue_i \times x_i}{\sum_i fitValue_i}, y = \frac{\sum_i fitValue_i \times y_i}{\sum_i fitValue_i},$$

   où $(x, y)$ sont des coordonnées de position de la position de centre de gravité, $(x_i, y_i)$ sont des coordonnées de position d'un point d'échantillonnage $i$ dans la grille, et $fitValue_i$ est une valeur ajustée du point d'échantillonnage $i$.

5. Procédé selon la revendication 4, comprenant en outre l'étape suivante :

   tramer (42) la position de déploiement selon au moins un des principes suivants, pour obtenir une position tramée de la station devant être déployée : tramage basé sur une condition limitée, tramage basé sur une isolation de zone spéciale, et tramage basé sur une distribution de trafic.

6. Procédé selon la revendication 5, comprenant en outre les étapes suivantes :

   déterminer (72) une macro cellule nominale de la station devant être déployée ;
   déterminer (73) le nombre optimal de stations déployées dans la macro cellule nominale ; et
   sélectionner et déployer (74) des stations avec le nombre identique au nombre optimal de stations déployées selon une valeur d'indicateur de chaque station devant être déployée.

7. Procédé selon la revendication 6, comprenant en outre les étapes suivantes :

   exécuter (82) une simulation pour des performances de communication avant que la station ne soit déployée et après que la station a été déployée, et si une condition définie est remplie en comparant des résultats de simulation, déterminer (82) la position pour déployer la station comme une position de déploiement réelle finale.

8. Procédé selon la revendication 6, dans lequel l'étape consistant à déterminer une macro cellule nominale de la station devant être déployée comprend :

former un ensemble de macro cellules candidates en utilisant des macro cellules nominales des points d'échantillonnage dans la grille dans laquelle une station doit être déployée ;
calculer un SINR entre la position de centre de gravité de la grille dans laquelle une station doit être déployée et chaque macro cellule dans l'ensemble de macro cellules candidates ; et
déterminer une macro cellule nominale selon une valeur SINR et le nombre de stations accédant à chaque macro cellule dans l'ensemble de macro cellules candidates.

**9.** Procédé selon la revendication 6, dans lequel l'étape consistant à déterminer le nombre optimal de stations déployées dans la macro cellule nominale comprend :

exécuter une simulation de capacité pour chaque macro cellule nominale lorsque différents nombres de stations accèdent à la macro cellule nominale, pour obtenir des résultats de simulation de capacité correspondant à différents nombres de stations ; et
déterminer le nombre de stations lorsqu'un résultat de simulation de capacité satisfait une condition définie, comme le nombre optimal de stations déployées.

**10.** Dispositif de sélection de site, comprenant :

un module de division (91), configuré pour diviser une zone à analyser dans laquelle une station doit être déployée, en plusieurs grilles, la station étant un noeud relais ou une station de base petite cellule dans un système de technologie d'évolution à long terme avancée, LTE-A ; et
un module de déploiement (92), configuré pour :

obtenir des points d'échantillon correspondant à chaque grille en échantillonnant à un intervalle d'une résolution de carte,
obtenir plusieurs valeurs d'indicateur de signal de chaque point d'échantillonnage, les multiples valeurs d'indicateur de signal comportant une puissance reçue de signal de référence, RSRP, et un rapport signal / interférences plus bruit, SINR,
obtenir une valeur ajustée de chaque point d'échantillonnage selon les multiples valeurs d'indicateur de signal,
obtenir une valeur RSRP et une valeur SINR de chaque grille selon la valeur ajustée de chaque point d'échantillonnage,
si la valeur RSRP d'une grille est comprise entre un seuil inférieur défini et un seuil supérieur défini, et que la valeur SINR de la grille est supérieure à un seuil défini, déterminer que la grille est une grille dans laquelle la station doit être déployée, et
déployer la station dans la grille.

**11.** Dispositif selon la revendication 10, dans lequel le module de division comprend :

une unité de détermination, configurée pour déterminer un rectangle minimum comportant une zone dans laquelle une station doit être déployée, comme la zone à analyser ; et
une unité de division, configurée pour diviser le rectangle minimum selon un rayon de transmission de la station, pour obtenir plusieurs grilles.

**12.** Dispositif selon la revendication 11, dans lequel l'unité de division est configurée spécifiquement pour :

exécuter un traitement de segmentation pour le rectangle minimum à un intervalle de N pour obtenir plusieurs grilles, où $\sqrt{2}R \le N \le 2R$, et R est le rayon de transmission de la station.

**13.** Dispositif selon la revendication 10, dans lequel le module de déploiement est en outre configuré spécifiquement pour :

déterminer une position de centre de gravité de points d'échantillonnage dans la grille dans laquelle la station doit être déployée, comme une position de déploiement de la station devant être déployée, une formule de calcul de la position de centre de gravité étant :

$$x = \frac{\sum_i fitValue_i \times x_i}{\sum_i fitValue_i}, \, y = \frac{\sum_i fitValue_i \times y_i}{\sum_i fitValue_i},$$

où $(x, y)$ sont des coordonnées de position de la position de centre de gravité, $(x_i, y_i)$ sont des coordonnées de position d'un point d'échantillonnage $i$ dans la grille, et $fitValue_i$ est une valeur ajustée du point d'échantillonnage $i$.

**14.** Dispositif selon la revendication 13, comprenant en outre :

un module de tramage, configuré pour tramer, selon au moins un des principes suivants, la position de déploiement obtenue par le module de détermination, pour obtenir une position tramée de la station devant être déployée : tramage basé sur une condition limitée, tramage basé sur une isolation de zone spéciale, et tramage basé sur une distribution de trafic.

**15.** Dispositif selon la revendication 14, comprenant en outre :

un module de sélection de priorité, configuré pour déterminer une macro cellule nominale de la station devant être déployée, qui est obtenue par le module de tramage ; déterminer le nombre optimal de stations déployées dans la macro cellule nominale ; et sélectionner et déployer des stations avec le nombre identique au nombre optimal de stations déployées selon une valeur d'indicateur de chaque station devant être déployée.

**16.** Dispositif selon la revendication 15, comprenant en outre :

un module de simulation, configuré pour exécuter une simulation pour des performances de communication avant que la station ne soit déployée et après que la station a été déployée, et si une condition définie est remplie en comparant des résultats de simulation, déterminer la position pour déployer la station comme une position de déploiement réelle finale.

**17.** Dispositif selon la revendication 15, dans lequel le module de sélection de priorité est configuré spécifiquement pour :

former un ensemble de macro cellules candidates en utilisant des macro cellules nominales des points d'échantillonnage dans la grille dans laquelle une station doit être déployée ;
calculer un SINR entre la position de centre de gravité de la grille dans laquelle une station doit être déployée et chaque macro cellule dans l'ensemble de macro cellules candidates ;
déterminer une macro cellule nominale selon une valeur SINR et le nombre de stations accédant à chaque macro cellule dans l'ensemble de macro cellules candidates ;
exécuter une simulation de capacité pour chaque macro cellule nominale lorsque différents nombres de stations accèdent à la macro cellule nominale, pour obtenir des résultats de simulation de capacité correspondant à différents nombres de stations ; et
déterminer le nombre de stations lorsqu'un résultat de simulation de capacité satisfait une condition définie, comme le nombre optimal de stations déployées.

| Divide a to-be-analyzed area in which a station is to be deployed, into multiple grids | 11 |

| Perform signal collection for sampling points in each grid, determine, according to collected signal indicator values, a grid in which a station needs to be deployed, and deploy, in the grid in which a station needs to be deployed, a station needing to be deployed | 12 |

FIG. 1

○ Simulation map sampling point  ┼┼ Relay deployment grid  ⌐ ─ ┐ Relay deployment area

FIG. 2

Weighted
value

FIG. 3

| Determine a deployment position in a grid in which a relay is to be deployed | 41 |
| --- | --- |

| Screen the deployment position | 42 |
| --- | --- |

FIG. 4

FIG. 5

FIG. 6

| Determine a relay to be deployed and an indicator value thereof | 71 |

↓

| Determine a home macro cell of the relay to be deployed | 72 |

↓

| Determine the optimal number of deployed relays in the home macro cell | 73 |

↓

| Select and deploy relays with the number the same as the optimal number of deployed relays according to an indicator value of each relay to be deployed | 74 |

FIG. 7

| Determine a position of a relay to be deployed | 81 |

↓

| Perform collaborative simulation for a scenario of deploying the relay in the position, and determine a final deployment position | 82 |

FIG. 8

| Dividing module | Deploying module |

91          92

FIG. 9

| Perform signal collection for sampling points in each grid, where the grid is obtained after a to-be-analyzed area in which a station is to be deployed is divided | 101 |

$\downarrow$

| Determine, according to collected signal indicator values, a grid in which a station needs to be deployed | 102 |

FIG. 10

| Collecting module | | Determining module |

111                                                                 112

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **HUNG-YU WEI.** *Adhoc relay network planning for improving cellular data coverage*